# EUROPEAN PATENT SPECIFICATION

(11) **EP 3 959 158 B1**
(45) Date of publication and mention of the grant of the patent: **28.01.2026**
(21) Application number: 20795282.1
(22) Date of filing: 03.04.2020
(51) Int. Cl.: B65G 17/40, B65G 17/08

(54) **BELT MODULE AND CONVEYOR BELT WITH STURDY EDGE**
BANDMODUL UND FÖRDERBAND MIT ROBUSTER KANTE
MODULE DE BANDE ET BANDE TRANSPORTEUSE À BORD ROBUSTE

(30) Priority: 24.04.2019 US 201962837819 P; 13.08.2019 US 201962885905 P
(43) Date of publication of application: 02.03.2022
(73) Proprietor: Laitram, L.L.C., Harahan, LA 70123 (US)
(72) Inventor: GUERNSEY, Kevin W., Destin, Florida 32541 (US); WENZEL, John E., Bush, Louisiana 70431 (US); VAN SCHALKWIJK, David Aaron, River Ridge, Louisiana 70123 (US); VULPETTI, Matthew, Metairie, Louisiana 70006 (US)
(74) Representative: Forresters IP LLP
(86) International application number: PCT/US2020/026683
(87) International publication number: WO 2020/219255

(56) References cited:
- WO-A1-2012/068694
- KR-A- 20070 006 783
- US-A- 4 925 016
- US-A- 5 850 902
- US-A1- 2003 136 647
- US-A1- 2010 258 410
- US-A1- 2010 258 410
- US-B2- 6 345 715
- US-B2- 7 980 385
- US-B2- 8 579 104

## Description

### BACKGROUND

The invention relates generally to power-driven conveyors. In particular the invention relates to conveyor belt modules joined at hinges to form modular conveyor belts.

Modular plastic conveyor belts are used to convey products. The belts are constructed of rows of plastic belt modules joined by hinge rods at hinge joints. For repair and often for cleaning, a belt has to be partly disassembled for a broken module to be replaced or for the belt to be removed from the conveyor frame for remote cleaning. The first stage in disassembling a modular plastic conveyor belt is the removal of a hinge rod by plant maintenance personnel. When in a hurry or without a proper tool at hand, maintenance personnel may snip or otherwise break off an edge of belt to expose the end of a hinge rod for a better purchase to pull it out of its hinge joint. Once the hinge rod is extracted, the belt can be removed from the conveyor, or broken modules can be replaced. But the broken belt edge loses its effectiveness as a hinge-rod retainer and becomes a potential snag point. US2010/258410 Al discloses a conveyor belt module according to the preamble of claim 1.

### SUMMARY

A conveyor belt module according to the invention is defined by the features of claim 1.

A conveyor belt according to the invention is defined by the features of claim 9.

A conveyor according to the invention is defined by the features of claim 15.

### BRIEF DESCRIPTION OF THE DRAWINGS

FIGS. 1A-1C are top isometric, bottom isometric, and bottom plan views of one version of two joined conveyor belt modules embodying features of the invention.
FIGS. 2A-2C are top isometric, bottom isometric, and bottom plan views of another version of two joined conveyor belt modules embodying features of the invention.
FIG. 3 is a bottom isometric view of the belt modules of FIG. 2 showing hinge rod removal by screwdriver.
FIG. 4 is a side elevation view of a conveyor belt constructed of modules as in FIG. 1A or FIG. 2A.
FIG. 7 is an isometric view of a full-width reversing element engaged with a conveyor belt constructed of belt modules as in FIG. 2A.

### DETAILED DESCRIPTION

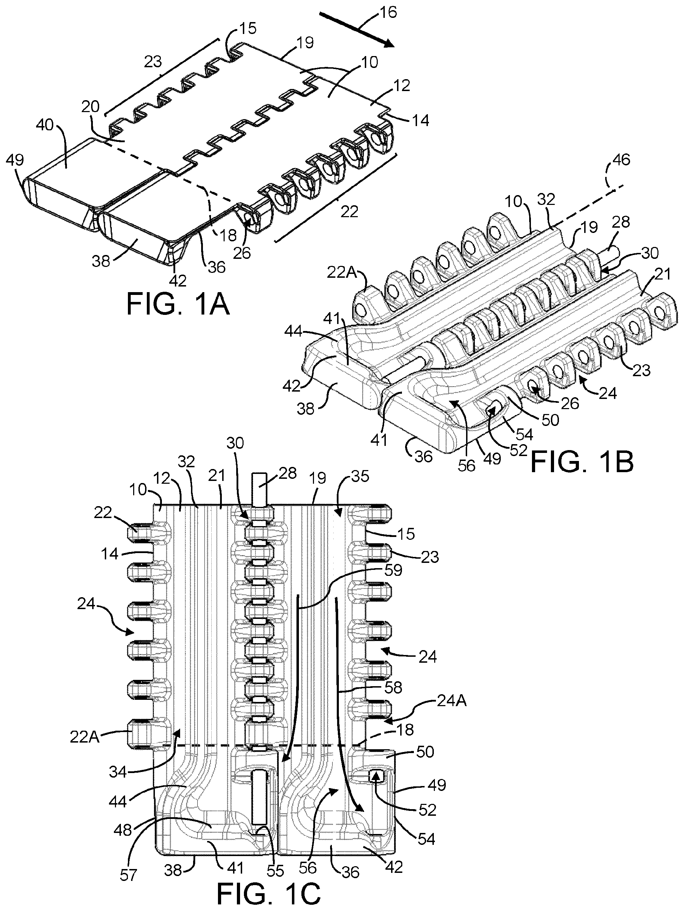

One version of conveyor belt modules having sturdy, thickened edges is shown in FIGS. 1A-1C. The modules 10 each have a deck 12 that extends in length from a first end 14 to a second end 15 in a direction of belt travel 16, laterally in width from a first side 18 to a second side 19, and in thickness from a top side 20 to a bottom side 21. First hinge elements 22 are spaced apart laterally across the width of the deck 12 along the first end 14. Second hinge elements 23 are spaced apart laterally across the width of the deck 12 along the second end 15. Gaps 24 between consecutive hinge elements 22, 23 are sized to receive the hinge elements of an adjacent module in an interleaved arrangement in which rod holes 26 extending laterally through the interleaved hinge elements are aligned to form a lateral passageway. The interleaved hinge elements 22, 23 of adjacent modules 10, together with a hinge rod 28 received in the passageway, form a hinge joint 30 connecting the adjacent modules.

One of the first hinge elements 22-the one closest to the first side 18 of the deck 12-is a laterally wider first hinge element 22A serving as an indexing hinge element. A corresponding wide space 24A at the first side 18 and the second end 15 is sized to receive the wide first hinge element 22A of an adjacent module 10. Because the wide hinge element 22A is too wide to fit in the other spaces 24 along the second end 15, the modules 10 can't be mistakenly misaligned during assembly: there is only one way to join them together. The wide hinge element 22A and the wide space 24A could alternatively be formed at other lateral positions along the groups of hinge elements 22, 23 to prevent the modules from being misaligned during assembly.

A rib 32 protruding from the bottom side 21 of the deck 12 extends laterally between the first and second sides 18, 19. The rib 32, which can serve as a drive bar for a drive sprocket or as an impact bar, divides the bottom side 21 of the deck 12 into a first region forming a first channel 34 between itself and the first hinge elements 22 and a second region forming a second channel 35 between itself and the second hinge elements 23.

A module edge portion 36 extends laterally outward from the first side 18 of the deck 12 to an outer edge 38. The edge portion 36 has a top surface 40 that forms a continuation of the top side 20 of the deck 12 out to the outer edge 38. A bottom surface 41 of the edge portion 36 extends laterally inward of the outer edge 38 short of the first side 18 of the deck 12. The bottom surface 41 forms a thickened outer edge region 42 with the top surface 40 and can be made wide enough to serve as a wear pad that slides along a carryway wearstrip. The thickened outer edge region 42 extends through the thickness of the module 10 on the module edge portion 36. A rib continuation 44 on the edge portion 36 extends from the bottom-side rib 32 at the first side 18 of the deck 12 to the bottom surface 41 to form extensions of the first and second channels 34, 35 onto the module edge portion out to the thickened outer edge region 42. The bottom surface 41 of the edge portion 36, the rib continuation 44, and the rib 32 extend to the same level 46 so as to be coplanar in this version. But they could extend to different levels in other versions.

The rib continuation 44 curves away from collinear alignment with the rib 32 to meet the bottom surface 41 at a first edge end 48 of the edge portion 36. The first edge end 48 is aligned with the first end 14 of the deck 12. An opposite second edge end 49 is outwardly offset in the length direction from the second end 15 of the deck 12. An edge hinge element 50 at the second edge end 49 has a rod hole 52 aligned with the rod holes 26 of the second hinge elements 23 along the second end 15 of the deck 12. The end of the hinge rod 28 normally resides between the edge hinge element 50 and the thickened outer edge region 42.

A web 54 extends from the thickened outer edge region 42 inward to the edge hinge element 50. The curved web 54 is continuous with the top surface 40 and extends around the circumference of the edge hinge element 50 to form a nose extending laterally along the second edge end 49 of the module edge portion 36. The web 54 extends circumferentially far enough to provide a guard preventing a finger from being pinched at the hinge joint 30. An inner wall 55 aligned with and facing the second hinge elements 23 and the edge hinge element 50 forms a stop for the hinge rod 28.

The end of the extension of the second channel 35 opens into a broader terminal space, a lacuna 56, bounded by the rib continuation 44, the thickened outer region 42, and the web 54. Cleaning fluid or water sprayed onto the bottom side of a conveyor belt in the belt return advances along the second channel 35 and into the lacuna 56, which exposes the edge hinge element 50, the inner side of the web 54, and the end of the hinge rod 28 to the cleaning fluid as indicated by the arrow 58. Cleaning fluid or water is guided by the first channel 34 to the first edge end 48 to clean between the edge portions 36 of adjacent modules 12, as indicated by the arrow 59.

The flat bottom surface 41 extends inward of the outer edge 38 to a ramp 57 that slopes further inward to the bed of the lacuna 56. The curved ramp 57, which forms an inner wall bounding the lacuna 54, prevents a pliers from getting a good purchase on the module edge portion 36 and snapping it off.

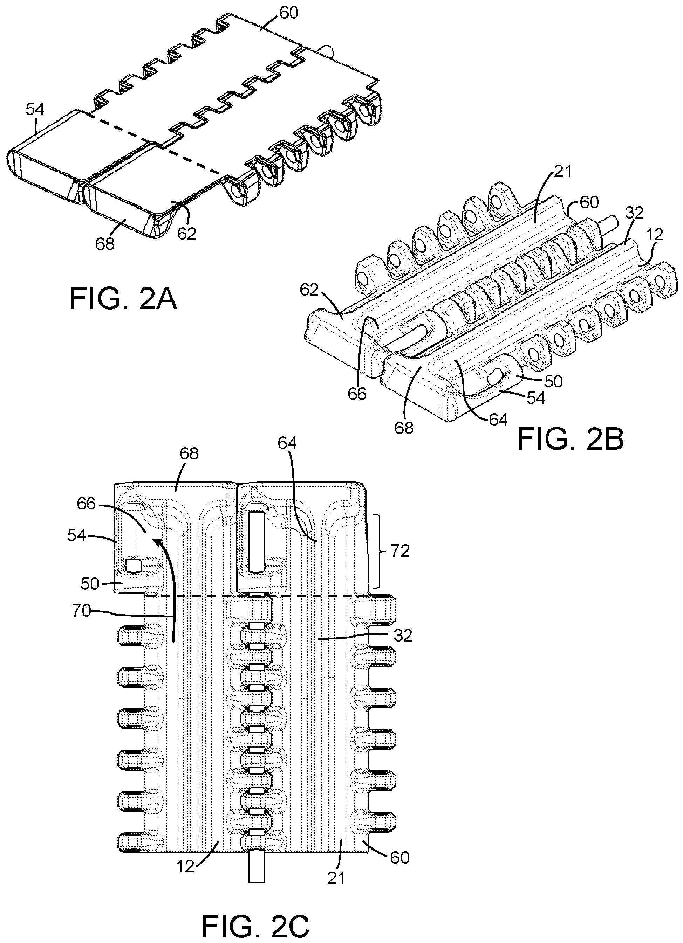

Another version of conveyor belt modules is shown in FIGS. 2A-2C. The modules 60 are similar to those in FIGS. 1A-1C, except that module edge portions 62 have a linear rib continuation 64 that is collinear with the rib 32 on the bottom side 21 of the deck 12. Because the rib continuation 64 does not curve away from collinear alignment with the rib 32, a lacuna 66 bounded by the rib continuation 64, a thickened outer edge portion 68, and the inner side of the web 54 is smaller than the lacuna shown in FIGS. 1B and 1C, but broader than the extended second channel 35. The extended second channel 35 opens into the lacuna 66 to guide cleaning fluid or water to the back of the web 54 and the edge hinge element 50 as indicated by the arrow 70. The collinear rib continuation 64 provides a longer exposed area 72 at the first edge end 48 of the module edge portion 62.

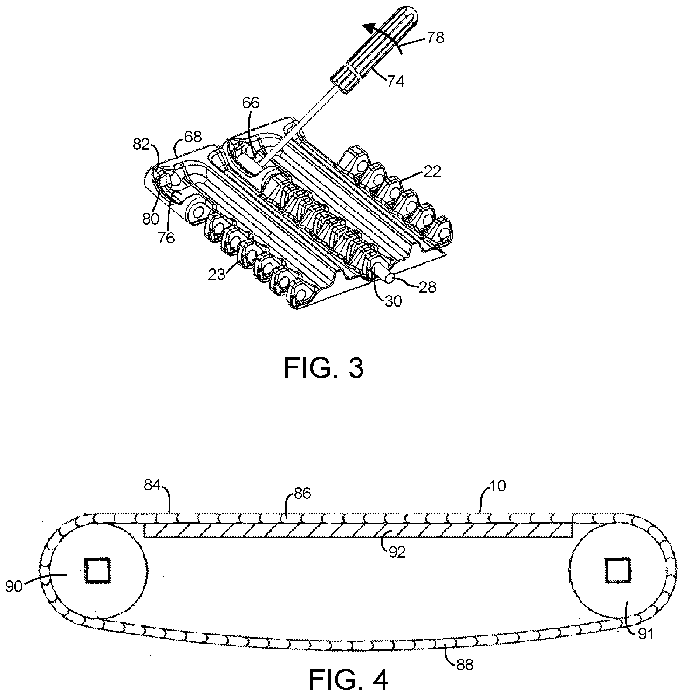

As shown in FIG. 3, the hinge rod 28 can be easily removed from the hinge joint 30 with a removal tool, such as a screwdriver 74. If a screwdriver is used the flat of the screwdriver 74 is inserted between the end of the hinge rod and the bed 76 of the lacuna 66. Then the screwdriver 74 is rotated about 90°, as indicated by the arrow 78, to lift the end of the hinge rod 28 away from the bed 76 and up an inner wall 80 of the thickened outer edge portion 68. The lifted end of the hinge rod 28 can then be grasped by a pliers or the fingers and pulled from the hinge joint 30 to disconnect the belt rows.

The rows are reconnected by first interleaving their first and second hinge elements 22, 23 into alignment. Then the end portion of the hinge rod 28 is bent and slid along a depression 82 in the outer edge portion 68 and into the rod hole in the edge hinge element 50. The hinge rod 28 is then pushed through the lateral passageway formed by the interleaved hinge elements 22, 23 to rejoin the two adjacent belt rows.

A modular conveyor belt 84 constructed of rows 86 of belt modules 10 (FIGS. 1A-1C) or belt modules 60 (FIGS. 2A-2C) is shown in FIG. 4. The rows 86 include one or more belt modules, including edge modules 10 (or 60) at the opposite outer edges 88 of the belt 84 and interior belt modules like the edge modules 10 (or 60), but without the module edge portion 38 (or 68). Such a modular belt with multiple modules per row 86 is typically arranged with the modules in a bricklay pattern to avoid continuous seams along the length of the belt. And the deck in each row of multiple modules is still considered to be continuous despite the narrow seams between abutting, laterally adjacent modules. Belt modules with module edge portions 38 (or 68) at both sides can be used to construct seamless belt rows consisting of only one belt module per row. In those belt modules the module edge portions 38 (or 68) are arranged with their edge hinge elements at opposite ends of the module for reversibility. The conveyor belt 84 is trained around drive and idle sprockets 90, 91 and supported along an upper carryway by wear strips 92 on which at least the bottom surfaces of the outer edge portions of the belt edge modules slide. The belt 84 returns from the drive sprocket 90 to the idle sprocket 91 in a lower return.

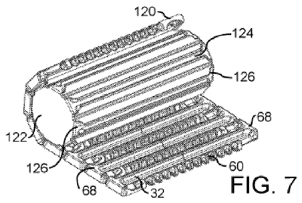

FIG. 7 shows a portion of a conveyor belt 120 constructed of the belt modules 60 shown in FIG. 2A. The belt 120 is shown engaged by a reversing element 122, such as a full-width drive or idle sprocket or drum around which the belt reverses direction from an upper carryway to a lower return. The full-width reversing element 122 is typically mounted in a fixed lateral position relative to a conventional conveyor frame (not shown). The outer cylindrical periphery of the reversing element 122 has circumferentially spaced lateral grooves 124 across its width sized to receive the belt ribs 32. At opposite sides of the reversing element 122, the grooves open at their ends into edge recesses 126 sized to receive the bottom surfaces of the thickened outer edge portions 68 of the belt modules 60. In this version the shape of the grooves 124 and the edge recesses 126 is complementary to the shape of the modules' outer edge portions 68 and ribs 32. The bottom surfaces of the thickened outer edge portions 68 of the belt 120 are confined in the edge recesses 126 to limit the lateral wander of the belt along the reversing element 122. In that way the reversing element 122 keeps the belt 120 on track in the conveyor frame.

Although the invention has be described in detail with respect to a few illustrative versions used to describe features of the invention, other versions are possible, as defined in the appended claims. For example, the lateral ribs or drive bars on the bottoms of the belt modules are shown as continuous and joining the thickened outer edge portions in all the versions. But the ribs could be divided into segments across gaps or could be separated from the thickened outer edge portions by gaps. And complementary reversing-element peripheries that mate with the bottoms of belt modules other than those in FIG. 7, such as the other modules described in detail, could be made to make a conveyor with full-width reversing elements that track a conveyor belt.

## Claims

1. A conveyor belt module (10; 60) comprising:
a deck (12) extending in length from a first end (14) to a second end (15), laterally in width from a first side (18) to a second side (19), and in thickness from a top side (20) to a bottom side (21);
a plurality of first hinge elements (22) spaced apart laterally across the width of the deck (12) along the first end (14);
a plurality of second hinge elements (23) spaced apart laterally across the width of the deck along the second end (15);
a rib (32) protruding from and extending laterally along the bottom side (21) of the deck (12);
wherein the rib (32) divides the bottom side (21) of the deck into a first region forming a first channel (34) between the rib (32) and the first hinge elements (22) and a second region forming a second channel (35) between the rib (32) and the second hinge elements (23);
a module edge portion (36) extending laterally outward from the first side (14) of the deck (12) to an outer edge (38) and including:
a top surface (40) forming a continuation of the top side (20) of the deck (12) from the first side (18) out to the outer edge (38);
a bottom surface (41) extending laterally inward from the outer edge (38) short of the first side (18) of the deck (12); and
wherein the bottom surface (41) forms with the top surface (40) a thickened outer edge region (42) thicker than the deck (12); wherein the module edge portion (36) includes a rib continuation (44) extending from the rib (32) at the first side (18) of the deck (12) to the bottom surface (21) to form extensions of the first and second channels (34, 35) onto the module edge portion (36) out to the bottom surface (41) and wherein the bottom surface (41) is continuous with the rib continuation (44);
wherein the module edge portion (36) extends in length from a first edge end (48) aligned with the first end (14) of the deck (12) to a second edge end (49) outwardly offset in length from the second end (15) of the deck (12); and **characterised in that**
the extension of the second channel (35) in the module edge portion (36) opens into a lacuna (56; 66) bounded by the thickened outer edge region (42), the rib continuation (44; 64), and the second edge end (49).

2. A conveyor belt module (10) as claimed in claim 1 wherein the rib continuation (44; 64) is collinear with the rib (32) or wherein the rib continuation curves away from collinear alignment with the rib to meet the bottom surface.

3. A conveyor belt module (10) as claimed in claim 1 wherein the rib continuation (44) meets the bottom surface of the module edge portion (36) at the first edge end (48).

4. A conveyor belt module (10) as claimed in claim 3 wherein the module edge portion (36) includes an edge hinge element (50) at the second edge end (49) aligned with the second hinge elements (23) along the second end of the deck.

5. A conveyor belt module (10) as claimed in claim 4 wherein the module edge portion (36) includes a web (54) extending from the thickened outer edge region (42) to the edge hinge element (50) and continuous with the top surface at the second edge end to form with the thickened outer edge region (42) and the rib continuation a lacuna (56) into which the extension of the second channel opens.

6. A conveyor belt module (10) as claimed in claim 1 wherein the bottom surface (41), the rib continuation (44), and the rib (32) extend from the deck (12) to the same level.

7. A conveyor belt module (10) as claimed in claim 1 wherein
a) the thickened outer edge region (42) is wider than the first hinge elements (22); or
b) the first hinge element (22) at the first side of the deck (12) is laterally wider than the other first hinge elements (22).

8. A conveyor belt module (10) as claimed in claim 1 wherein the module edge portion (36) includes a ramp (57) extending from the bottom side of the deck at the first side of the deck to the bottom surface of the module edge portion; or wherein the module edge portion includes an inner wall aligned with and facing the first hinge elements.

9. A conveyor belt (84) comprising:
a series of rows (86) of one or more conveyor belt modules (10) according to any one of the preceding claims extending laterally in width from a first belt edge to a second belt edge and hingedly connected end to end at hinge joints between consecutive rows.

10. A conveyor belt (84) as claimed in claim 9 wherein each of the rows includes two or more conveyor belt modules (10) forming the deck separated by seams between abutting conveyor belt modules.

11. A conveyor belt (84) as claimed in claim 9 wherein the first module edge portion (36) is formed on a first conveyor belt module at the first belt edge and the second module edge portion is formed on a second conveyor belt module at the second belt edge.

12. A conveyor belt (84) as claimed in claim 9 wherein each of the first and second module edge portions (36) includes a rib continuation (44) extending from the rib on the deck to the bottom surface to form extensions of the first and second channels onto the module edge portion out to the bottom surface and wherein the bottom surface is continuous with the rib continuation.

13. A conveyor belt (84) as claimed in claim 12 wherein the first module edge portion (36) extends in length from a first edge end aligned with the first end of the deck to a second edge end outwardly offset in length from the second end of the deck and wherein the second module edge portion extends in length from a first edge end aligned with the second end of the deck to a second edge end outwardly offset in length from the first end of the deck.

14. A conveyor belt (84) as claimed in claim 13 wherein the first module edge portion (36) includes a first lacuna (56) into which the second channel opens, wherein the first lacuna is bounded by the thickened outer edge region, the rib continuation, and the second edge end of the first module edge portion, and wherein the second module edge portion includes a second lacuna (56) into which the first channel opens, wherein the second lacuna is bounded by the thickened outer edge region, the rib continuation, and the first edge end of the second module edge portion.

15. A conveyor comprising:
a conveyor belt (84) including:
a series of rows of one or more conveyor belt modules (10) as claimed in any one of claims 1 to 8 extending laterally in width from a first belt edge to a second belt edge and hingedly connected end to end at hinge joints between consecutive rows, and
a reversing element (122) having a cylindrical periphery including a plurality of lateral grooves sized to receive the ribs and opening up at each end of the lateral grooves to edge recesses sized to receive the bottom surfaces of the thickened outer edge regions, wherein the bottom surfaces are confined in the edge recesses to limit lateral wander of the conveyor belt along the reversing element.

## Patentansprüche

1. Förderbandmodul (10; 60), umfassend:
ein Deck (12), das sich in der Länge von einem ersten Ende (14) zu einem zweiten Ende (15), lateral in der Breite von einer ersten Seite (18) zu einer zweiten Seite (19) und in der Dicke von einer Oberseite (20) zu einer Unterseite (21) erstreckt;
eine Vielzahl von ersten Scharnierelementen (22), die lateral über die Breite des Decks (12) entlang des ersten Endes (14) beabstandet sind;
eine Vielzahl von zweiten Scharnierelementen (23), die lateral über die Breite des Decks entlang des zweiten Endes (15) beabstandet sind;
eine Rippe (32), die aus der Unterseite (21) des Decks (12) vorsteht und sich lateral entlang dieser erstreckt;
wobei die Rippe (32) die Unterseite (21) des Decks in einen ersten Bereich, der einen ersten Kanal (34) zwischen der Rippe (32) und den ersten Scharnierelementen (22) bildet, und einen zweiten Bereich, der einen zweiten Kanal (35) zwischen der Rippe (32) und den zweiten Scharnierelementen (23) bildet, unterteilt;
einen Modulkantenabschnitt (36), der sich lateral nach außen von der ersten Seite (14) des Decks (12) zu einer Außenkante (38) erstreckt und Folgendes beinhaltet:
eine obere Oberfläche (40), die eine Fortsetzung der Oberseite (20) des Decks (12) von der ersten Seite (18) heraus zu der Außenkante (38) bildet;
eine untere Oberfläche (41), die sich lateral nach innen von der Außenkante (38) bis kurz vor der ersten Seite (18) des Decks (12) erstreckt; und
wobei die untere Oberfläche (41) einen verdickten Außenkantenbereich (42) mit der oberen Oberfläche (40) bildet, der dicker als das Deck (12) ist; wobei der Modulkantenabschnitt (36) eine Rippenfortsetzung (44) beinhaltet, die sich von der Rippe (32) an der ersten Seite (18) des Decks (12) zu der unteren Oberfläche (21) erstreckt, um Verlängerungen des ersten und zweiten Kanals (34, 35) auf den Modulkantenabschnitt (36) heraus zu der unteren Oberfläche (41) zu bilden, und wobei die untere Oberfläche (41) durchgehend mit der Rippenfortsetzung (44) ist;
wobei sich der Modulkantenabschnitt (36) in der Länge von einem ersten Kantenende (48), das mit dem ersten Ende (14) des Decks (12) ausgerichtet ist, zu einem zweiten Kantenende (49), das in der Länge von dem zweiten Ende (15) des Decks (12) nach außen versetzt ist, erstreckt; und **dadurch gekennzeichnet, dass**
die Verlängerung des zweiten Kanals (35) in dem Modulkantenabschnitt (36) sich in eine Lakune (56; 66) öffnet, die von dem verdickten Außenkantenbereich (42), der Rippenfortsetzung (44; 64) und dem zweiten Kantenende (49) eingegrenzt ist.

2. Förderbandmodul (10) nach Anspruch 1, wobei die Rippenfortsetzung (44; 64) kollinear mit der Rippe (32) ist oder wobei sich die Rippenfortsetzung von der kollinearen Ausrichtung mit der Rippe weg krümmt ist, um auf die untere untere Oberfläche zu treffen.

3. Förderbandmodul (10) nach Anspruch 1, wobei die Rippenfortsetzung (44) an dem ersten Kantenende (48) auf die untere Oberfläche des Modulkantenabschnitts (36) trifft.

4. Förderbandmodul (10) nach Anspruch 3, wobei der Modulkantenabschnitt (36) ein Kantenscharnierelement (50) an dem zweiten Kantenende (49) beinhaltet, das mit den zweiten Scharnierelementen (23) entlang des zweiten Endes des Decks ausgerichtet ist.

5. Förderbandmodul (10) nach Anspruch 4, wobei der Modulkantenabschnitt (36) einen Steg (54) beinhaltet, der sich von dem verdickten Außenkantenbereich (42) zu dem Kantenscharnierelement (50) erstreckt und durchgehend mit der oberen Oberfläche an dem zweiten Kantenende ist, um mit dem verdickten Außenkantenbereich (42) und der Rippenfortsetzung eine Lakune (56) zu bilden, in die sich die Verlängerung des zweiten Kanals öffnet.

6. Förderbandmodul (10) nach Anspruch 1, wobei sich die untere Oberfläche (41), die Rippenfortsetzung (44) und die Rippe (32) von dem Deck (12) auf die gleiche Höhe erstrecken.

7. Förderbandmodul (10) nach Anspruch 1, wobei
a) der verdickte Außenkantenbereich (42) breiter als die ersten Scharnierelemente (22) ist; oder
b) das erste Scharnierelement (22) an der ersten Seite des Decks (12) lateral breiter als die anderen ersten Scharnierelemente (22) ist.

8. Förderbandmodul (10) nach Anspruch 1, wobei der Modulkantenabschnitt (36) eine Rampe (57) beinhaltet, die sich von der Unterseite des Decks an der ersten Seite des Decks bis zu der unteren Oberfläche des Modulkantenabschnitts erstreckt; oder wobei der Modulkantenabschnitt eine Innenwand beinhaltet, die mit den ersten Scharnierelementen ausgerichtet ist und diesen zugewandt ist.

9. Förderband (84), umfassend:
eine Serie von Reihen (86) eines oder mehrerer Förderbandmodule (10) nach einem der vorhergehenden Ansprüche, die sich lateral in der Breite von einer ersten Bandkante zu einer zweiten Bandkante erstrecken und an den Scharnierverbindungen zwischen aufeinanderfolgenden Reihen gelenkig Ende an Ende verbunden sind.

10. Förderband (84) nach Anspruch 9, wobei jede der Reihen zwei oder mehr Förderbandmodule (10) beinhaltet, die das Deck bilden und durch Nähte zwischen aneinanderstoßenden Förderbandmodulen getrennt sind.

11. Förderband (84) nach Anspruch 9, wobei der erste Modulkantenabschnitt (36) auf einem ersten Förderbandmodul an der ersten Bandkante gebildet ist und der zweite Modulkantenabschnitt auf einem zweiten Förderbandmodul an der zweiten Bandkante gebildet ist.

12. Förderband (84) nach Anspruch 9, wobei jeder der ersten und zweiten Modulkantenabschnitte (36) eine Rippenfortsetzung (44) beinhaltet, die sich von der Rippe auf dem Deck zu der unteren Oberfläche erstreckt, um Verlängerungen des ersten und zweiten Kanals auf den Modulkantenabschnitt heraus zu der unteren Oberfläche zu bilden, und wobei die untere Oberfläche durchgehend mit der Rippenfortsetzung ist.

13. Förderband (84) nach Anspruch 12, wobei sich der erste Modulkantenabschnitt (36) in der Länge von einem ersten Kantenende, das mit dem ersten Ende des Decks ausgerichtet ist, zu einem zweiten Kantenende, das nach außen in der Länge von dem zweiten Ende des Decks versetzt ist, erstreckt und wobei sich der zweite Modulkantenabschnitt in der Länge von einem ersten Kantenende, das mit dem zweiten Ende des Decks ausgerichtet ist, zu einem zweiten Kantenende, das nach außen in der Länge von dem ersten Ende des Decks versetzt ist, erstreckt.

14. Förderband (84) nach Anspruch 13, wobei der erste Modulkantenabschnitt (36) eine erste Lakune (56) beinhaltet, in die sich der zweite Kanal öffnet, wobei die erste Lakune von dem verdickten Außenkantenbereich, der Rippenfortsetzung und dem zweiten Kantenende des ersten Modulkantenabschnitts eingegrenzt wird, und wobei der zweite Modulkantenabschnitt eine zweite Lakune (56) beinhaltet, in die sich der erste Kanal öffnet, wobei die zweite Lakune von dem verdickten Außenrandbereich, der Rippenfortsetzung und dem ersten Kantenende des zweiten Modulkantenabschnitts eingegrenzt wird.

15. Förderer, umfassend:
ein Förderband (84), beinhaltend:
eine Serie von Reihen eines oder mehrerer Förderbandmodule (10) nach einem der Ansprüche 1 bis 8, die sich lateral in der Breite von einer ersten Bandkante zu einer zweiten Bandkante erstrecken und an Scharnierverbindungen zwischen aufeinanderfolgenden Reihen gelenkig Ende zu Ende verbunden sind, und
ein Umkehrelement (122) mit einer zylindrischen Peripherie einschließlich einer Vielzahl von lateralen Nuten, die dimensioniert sind, um die Rippen aufzunehmen, und sich an jedem Ende der lateralen Nuten zu Kantenaussparungen öffnen, die dimensioniert sind, um die unteren Oberflächen der verdickten Außenkantenbereiche aufzunehmen, wobei die unteren Oberflächen in den Kantenaussparungen eingeschlossen sind, um ein laterales Abschweifen des Förderbands entlang des Umkehrelements zu begrenzen.

## Revendications

1. Module de bande transporteuse (10 ; 60) comprenant :
une plateforme (12) s'étendant en longueur depuis une première extrémité (14) jusqu'à une deuxième extrémité (15), latéralement en largeur depuis un premier côté (18) jusqu'à un deuxième côté (19), et en épaisseur depuis un côté supérieur (20) jusqu'à un côté inférieur (21) ;
une pluralité de premiers éléments d'articulation (22) espacés latéralement sur la largeur de la plateforme (12) le long de la première extrémité (14) ;
une pluralité de deuxièmes éléments d'articulation (23) espacés latéralement sur la largeur de la plateforme le long de la deuxième extrémité (15) ;
une nervure (32) dépassant du et s'étendant latéralement le long du côté inférieur (21) de la plateforme (12) ;
dans lequel la nervure (32) divise le côté inférieur (21) de la plateforme en une première région formant un premier canal (34) entre la nervure (32) et les premiers éléments d'articulation (22), et une deuxième région formant un deuxième canal (35) entre la nervure (32) et les deuxièmes éléments d'articulation (23) ;
une partie de bord de module (36) s'étendant latéralement vers l'extérieur depuis le premier côté (14) de la plateforme (12) jusqu'à un bord extérieur (38) et comprenant :
une surface supérieure (40) formant une continuation du côté supérieur (20) de la plateforme (12) depuis le premier côté (18) jusqu'au bord extérieur (38) ;
une surface inférieure (41) s'étendant latéralement vers l'intérieur depuis le bord extérieur (38) en avant du premier côté (18) de la plateforme (12) ; et
dans lequel la surface inférieure (41) forme avec la surface supérieure (40) une région de bord extérieur épaissie (42) plus épaisse que la plateforme (12) ; dans lequel la partie de bord de module (36) comprend une continuation de nervure (44) s'étendant depuis la nervure (32) du premier côté (18) de la plateforme (12) jusqu'à la surface inférieure (21) pour former des prolongements des premier et deuxième canaux (34, 35) sur la partie de bord de module (36) jusqu'à la surface inférieure (41), et dans lequel la surface inférieure (41) est continue avec la continuation de nervure (44) ;
dans lequel la partie de bord de module (36) s'étend en longueur depuis une première extrémité de bord (48) alignée avec la première extrémité (14) de la plateforme (12) jusqu'à une deuxième extrémité de bord (49) décalée en longueur vers l'extérieur par rapport à la deuxième extrémité (15) de la plateforme (12) ; et **caractérisé en ce que**
le prolongement du deuxième canal (35) dans la partie de bord de module (36) s'ouvre en une lacune (56 ; 66) délimitée par la région de bord extérieur épaissie (42), la continuation de nervure (44 ; 64) et la deuxième extrémité de bord (49).

2. Module de bande transporteuse (10) selon la revendication 1, dans lequel la continuation de nervure (44 ; 64) est colinéaire avec la nervure (32), ou dans lequel la continuation de nervure s'incurve en s'éloignant de l'alignement colinéaire avec la nervure pour rejoindre la surface inférieure.

3. Module de bande transporteuse (10) selon la revendication 1, dans lequel la continuation de nervure (44) rencontre la surface inférieure de la partie de bord de module (36) à la première extrémité de bord (48).

4. Module de bande transporteuse (10) selon la revendication 3, dans lequel la partie de bord de module (36) comprend un élément d'articulation de bord (50) à la deuxième extrémité de bord (49) aligné avec les deuxièmes éléments d'articulation (23) le long de la deuxième extrémité de la plateforme.

5. Module de bande transporteuse (10) selon la revendication 4, dans lequel la partie de bord de module (36) comprend une toile (54) s'étendant depuis la région de bord extérieur épaissie (42) jusqu'à l'élément d'articulation de bord (50) et continue avec la surface supérieure à la deuxième extrémité de bord pour former, avec la région de bord extérieur épaissie (42) et la continuation de nervure, une lacune (56) dans laquelle s'ouvre le prolongement du deuxième canal.

6. Module de bande transporteuse (10) selon la revendication 1, dans lequel la surface inférieure (41), la continuation de nervure (44) et la nervure (32) s'étendent depuis la plateforme (12) jusqu'au même niveau.

7. Module de bande transporteuse (10) selon la revendication 1, dans lequel
a) la région de bord extérieur épaissie (42) est plus large que les premiers éléments d'articulation (22) ; ou
b) le premier élément d'articulation (22) du premier côté de la plateforme (12) est latéralement plus large que les autres premiers éléments d'articulation (22).

8. Module de bande transporteuse (10) selon la revendication 1, dans lequel la partie de bord de module (36) comprend une surface inclinée (57) s'étendant depuis le côté inférieur de la plateforme du premier côté de la plateforme jusqu'à la surface inférieure de la partie de bord de module ; ou dans lequel la partie de bord de module comprend une paroi intérieure alignée avec et orientée vers les premiers éléments d'articulation.

9. Bande transporteuse (84) comprenant :
une série de rangées (86) d'un ou plusieurs modules de bande transporteuse (10) selon l'une quelconque des revendications précédentes, s'étendant latéralement en largeur depuis un premier bord de bande jusqu'à un deuxième bord de bande et reliées par charnière bout à bout au niveau d'articulations charnières entre des rangées consécutives.

10. Bande transporteuse (84) selon la revendication 9, dans laquelle chacune des rangées comprend deux modules de bande transporteuse ou plus (10) formant la plateforme, séparés par des jointures entre des modules de bande transporteuse adjacents.

11. Bande transporteuse (84) selon la revendication 9, dans laquelle la première partie de bord de module (36) est formée sur un premier module de bande transporteuse au niveau du premier bord de bande et la deuxième partie de bord de module est formée sur un deuxième module de bande transporteuse au niveau du deuxième bord de bande.

12. Bande transporteuse (84) selon la revendication 9, dans laquelle chacune des première et deuxième parties de bord de module (36) comprend une continuation de nervure (44) s'étendant depuis la nervure sur la plateforme jusqu'à la surface inférieure pour former des prolongements des premier et deuxième canaux sur la partie de bord de module jusqu'à la surface inférieure, et dans laquelle la surface inférieure est continue avec la continuation de nervure.

13. Bande transporteuse (84) selon la revendication 12, dans laquelle la première partie de bord de module (36) s'étend en longueur depuis une première extrémité de bord alignée avec la première extrémité de la plateforme jusqu'à une deuxième extrémité de bord décalée en longueur vers l'extérieur par rapport à la deuxième extrémité de la plateforme, et dans laquelle la deuxième partie de bord de module s'étend en longueur depuis une première extrémité de bord alignée avec la deuxième extrémité de la plateforme jusqu'à une deuxième extrémité de bord décalée en longueur vers l'extérieur par rapport à la première extrémité de la plateforme.

14. Bande transporteuse (84) selon la revendication 13, dans laquelle la première partie de bord de module (36) comprend une première lacune (56) dans laquelle s'ouvre le deuxième canal, la première lacune étant délimitée par la région de bord extérieur épaissie, la continuation de nervure, et la deuxième extrémité de bord de la première partie de bord de module, et dans laquelle la deuxième partie de bord de module comprend une deuxième lacune (56) dans laquelle s'ouvre le premier canal, la deuxième lacune étant délimitée par la région de bord extérieur épaissie, la continuation de nervure, et la première extrémité de bord de la deuxième partie de bord de module.

15. Convoyeur comprenant :
une bande transporteuse (84) comprenant :
une série de rangées d'un ou plusieurs modules de bande transporteuse (10) selon l'une quelconque des revendications 1 à 8, s'étendant latéralement en largeur depuis un premier bord de bande jusqu'à un deuxième bord de bande et reliées par charnière bout à bout au niveau d'articulations charnières entre des rangées consécutives, et
un élément d'inversion (122) ayant une périphérie cylindrique comprenant une pluralité de gorges latérales dimensionnées pour recevoir les nervures et s'ouvrant à chaque extrémité des gorges latérales dans des creux de bord dimensionnés pour recevoir les surfaces inférieures des régions de bord extérieur épaissies, les surfaces inférieures étant confinées dans les creux de bord pour limiter la déviation latérale de la bande transporteuse le long de l'élément d'inversion.
